(19) Europäisches Patentamt / European Patent Office / Office européen des brevets

(11) **EP 4 542 506 A1**

(12) **EUROPEAN PATENT APPLICATION**

(43) Date of publication:
23.04.2025   Bulletin 2025/17

(21) Application number: **24200296.2**

(22) Date of filing: **13.09.2024**

(51) International Patent Classification (IPC):
**G06V 10/774** (2022.01)   **G06V 20/54** (2022.01)

(52) Cooperative Patent Classification (CPC):
**G06V 10/774; G06V 20/54**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **16.10.2023   JP 2023178236**

(72) Inventors:
• **HATANO, Yasuyoshi**
  **Toyota-shi, 471-8571 (JP)**
• **IWAHORI, Kento**
  **Toyota-shi, 471-8571 (JP)**
• **YOKOYAMA, Daiki**
  **Toyota-shi, 471-8571 (JP)**
• **KAKUMA, Daisuke**
  **Tokyo, 103-0022 (JP)**
• **CHIBA, Hiroya**
  **Tokyo, 103-0022 (JP)**

(71) Applicant: **TOYOTA JIDOSHA KABUSHIKI KAISHA**
**Aichi-ken, 471-8571 (JP)**

(74) Representative: **D Young & Co LLP**
**3 Noble Street**
**London EC2V 7BQ (GB)**

(54) **METHOD AND DEVICE**

(57)    A method comprises: acquiring a moving route of a moving object; generating a superimposed image by superimposing an image or three-dimensional data representing the moving object and an image or three-dimensional data representing an environment related to moving including the moving route on each other; acquiring a label information about the location and position of the moving object; and generating a learning data set including the superimposed image and the label information.

Fig.11

**EP 4 542 506 A1**

**Description**

CROSS REFERENCE TO RELATED APPLICATIONS

This application claims priority to Japanese Patent Application No. 2023-178236, filed October 16, 2023, the disclosure of which is incorporated by reference herein in its entirety.

BACKGROUND

FIELD

The present disclosure relates to method and device.

There is a known technique of detecting the location of a running vehicle using an image captured by a camera installed external to the vehicle (for example, Japanese Patent Application Publication (Translation of PCT Application) No. 2017-538619).

If artificial intelligence is used in detecting a moving object such as the vehicle from the image captured by the camera, a huge quantity of data to be learned by the artificial intelligence is required to be prepared. This induces a desire for a technique of reducing burden of preparing data for learning.

SUMMARY

The present disclosure is feasible in the following aspects.

(1) According to a first aspect of the present disclosure, a method is provided. The method comprises: a moving route acquiring step of acquiring a moving route of a moving object; a superimposed image generating step of generating a superimposed image by superimposing an image or three-dimensional data representing the moving object and an image or three-dimensional data representing an environment related to moving including the moving route on each other; a label information acquiring step of acquiring label information about the location and position of the moving object; and a data set generating step of generating a learning data set including the superimposed image and the label information.

According to the method of this aspect, as the learning data set including the superimposed image is generated, it is possible to reduce the burden of preparing the learning data set.

(2) The method of the above-described aspect may further comprise a step of conducting predetermined work on the image or the three-dimensional data about the environment related to moving before implementation of the superimposed image generating step.

According to the method of this aspect, it is possible to generate the learning data set including the superimposed image in an intended state.

(3) The method of the above-described aspect may further comprise a step of conducting predetermined work on the image or the three-dimensional data about the moving object before implementation of the superimposed image generating step.

According to the method of this aspect, it is possible to generate the learning data set including the superimposed image in an intended state.

(4) The method of the above-described aspect may further comprise a step of conducting predetermined work on the superimposed image.

According to the method of this aspect, it is possible to generate the learning data set including the superimposed image in an intended state.

(5) In the method of the above-described aspect, the work may include at least one of addition or change of light to be applied to the moving object and addition or change of shading of the moving object.

According to the method of this aspect, it is possible to make a difference in the visual effect of the moving object represented in the superimposed image.

(6) In the method of the above-described aspect, the work may include change of at least one of lightness, saturation, and contrast.

According to the method of this aspect, it is possible to make a difference in the visual effect of the moving object or that of the environment related to moving represented in the superimposed image.

(7) In the method of the above-described aspect, the superimposed image generating step may be performed a plurality of times, and a difference may be made in the location of the moving object in a direction parallel to the moving route between at least two of a plurality of the superimposed images generated by performing the superimposed image generating step the plurality of times.

According to the method of this aspect, it is possible to generate a plurality of the superimposed images where the moving object is at locations differing from each other in the direction parallel to the moving route.

(8) In the method of the above-described aspect, the superimposed image generating step may be performed a plurality of times, and a difference may be made in the location of the moving object in a direction vertical to the moving route between at least two of a plurality of the superimposed images generated by performing the superimposed image generating step the plurality of times.

According to the method of this aspect, it is possible to generate a plurality of the superimposed images where the moving object is at locations differing from each other in the direction vertical to the moving route.

(9) In the method of the above-described aspect, the superimposed image generating step may be performed a plurality of times, and a difference may be made in the position of the moving object relative to the moving route between at least two of a plurality of the superimposed images generated by performing the superimposed image generating step the plurality of times.

According to the method of this aspect, it is possible to generate a plurality of the superimposed images where the moving object is at positions differing from each other relative to the moving route.

(10) In the method of the above-described aspect, the superimposed image generating step may be performed a plurality of times, and a difference may be made in the color of the moving object between at least two of a plurality of the superimposed images generated by performing the superimposed image generating step the plurality of times.

According to the method of this aspect, it is possible to generate a plurality of the superimposed images where the moving object has colors differing from each other.

(11) In the method of the above-described aspect, in the label information acquiring step, the label information may be acquired from information associated with the image or the three-dimensional data about the moving object.

According to the method of this aspect, it is possible to eliminate the burden of preparing information separately about the location and position of the moving object.

(12) The method of the above-described aspect may further comprise a learning step of performing machine learning using a learning data set group including the learning data set.

According to the method of this aspect, it is possible to perform the machine learning using the learning data set including the superimposed image.

(13) The method of the above-described aspect may further comprise a step of acquiring information about the location and position of the moving object during a move in the environment related to moving using a learned model generated by the learning step and a captured image of the moving object during the move in the environment related to moving.

According to the method of this aspect, it is possible to acquire the information about the location and position of the moving object during the move in the environment related to moving using the learned model.

(14) In the method of the above-described aspect, the superimposed image generating step may be performed a plurality of times, the method may further comprise a learning step of performing machine learning using a learning data set group including a plurality of the learning data sets, of a plurality of locations on the moving route, a particular location may be determined where accuracy of output of a learned model generated by the learning step is comparatively low, and the number of the learning data sets corresponding to the particular location may be increased compared to the other location.

According to the method of this aspect, it is possible to increase accuracy of output of the learned model at the particular location.

(15) In the method of the above-described aspect, the superimposed image generating step may be performed a plurality of times, the method may further comprise a learning step of performing machine learning using a learning data set group including a plurality of the learning data sets, of a plurality of locations on the moving route, a particular location may be determined where accuracy of output of a learned model generated by the learning step is comparatively low, and the learning data set responsive to an environment of the particular location may be generated.

According to the method of this aspect, it is possible to increase accuracy of output of the learned model at the particular location.

(16) According to a second aspect of the present disclosure, a device is provided. The device comprises: a moving route acquisition unit that acquires a moving route of a moving object; a superimposed image generation unit that generates a superimposed image by superimposing an image or three-dimensional data representing the moving object and an image or three-dimensional data representing an environment related to moving including the moving route on each other; a label information acquisition unit that acquires label information about the location and position of the moving object; and a data set generation unit that generates a learning data set including the superimposed image and the label information.

According to the device of this aspect, as the learning data set including the superimposed image is generated, it is possible to reduce the burden of preparing the learning data set.

(17) According to a third aspect of the present disclosure, a computer program is provided. The computer program causes a computer to fulfill: a function of acquiring an image or three-dimensional data representing a moving object or an image or three-dimensional data representing an environment related to moving of the moving object; a function of displaying a screen allowing selection of a working condition relating to work to be conducted on the acquired image or three-dimensional data; and a function of conducting the work responsive to the selected working condition on the acquired image or three-dimensional data.

According to the computer program of this aspect, it is possible to generate the superimposed image responsive to the working condition selected by a user.

(18) In the computer program of the above-described aspect, the work may include change of at least one of lightness, saturation, and contrast.

According to the computer program of this aspect, it is possible to generate the superimposed image in an intended state.

(19) In the computer program of the above-described aspect, the work may include at least one of addition or change of light to be applied to the moving object and addition or change of shading of the moving object.

According to the computer program of this aspect, it is possible to generate the superimposed image in an intended state.

(20) According to a fourth aspect of the present disclosure, a computer program is provided. The computer program causes a computer to fulfill: a function of acquiring an image or three-dimensional data representing a moving object and an image or three-dimensional data representing an environment related to moving of the moving object; a function of displaying a screen allowing selection of a superimposing condition for superimposing the image or the three-dimensional data representing the moving object and the image or the three-dimensional data representing the environment related to moving on each other; and a function of generating a superimposed image by superimposing the image or the three-dimensional data representing the moving object and the image or the three-dimensional data representing the environment related to moving on each other in response to the selected superimposing condition.

According to the computer program of this aspect, it is possible to generate the superimposed image responsive to the superimposing condition selected by a user.

(21) In the computer program of the above-described aspect, the superimposing condition may include at least one of the location and position of the moving object relative to the environment related to moving.

According to the computer program of this aspect, it is possible to generate the superimposed image in an intended state.

(22) According to a fifth aspect of the present disclosure, a learning data set used for machine learning is provided. The learning data set comprises: a superimposed image generated by superimposing an image or three-dimensional data representing a moving object and an image or three-dimensional data representing an environment related to moving of the moving object on each other; and information about the location and position of the moving object.

According to the learning data set of this aspect, it is possible to use this learning data set in generating a learned model for acquiring information about the location and position of the moving object.

The present disclosure is feasible in various aspects other than the method, the device, the computer program, and the learning data set. For example, the present disclosure may be realized in aspects including a system and a recording medium storing a computer program, and others.

BRIEF DESCRIPTION OF THE DRAWINGS

Fig. 1 is an explanatory view showing the configuration of a system according to a first embodiment;
Fig. 2 is an explanatory view showing the configuration of a vehicle according to the first embodiment;
Fig. 3 is an explanatory view showing the configuration of a server device according to the first embodiment;
Fig. 4 is a flowchart showing a substance of an unmanned driving process according to the first embodiment;
Fig. 5 is a flowchart showing an example of a method of generating shape data and an example of a method of acquiring the location of the vehicle using the shape data;
Fig. 6 is a schematic view showing examples of various types of images resulting from implementation of the methods shown in Fig. 5;
Fig. 7 is an explanatory view for explaining details of a coordinate point calculating step;
Fig. 8 is an explanatory view for explaining a method of calculating a base coordinate point;
Fig. 9 is a first explanatory view for explaining details of a location converting step;
Fig. 10 is a second explanatory view for explaining details of the location converting step;
Fig. 11 is a flowchart showing a substance of a learned model generating method;
Fig. 12 is an explanatory view schematically showing how a factory model and a vehicle model are superimposed on each other;

Fig. 13 is an explanatory view schematically showing a learning data set group;
Fig. 14 is an explanatory view schematically showing a selection screen;
Fig. 15 is an explanatory view showing the configuration of a vehicle according to a second embodiment;
Fig. 16 is an explanatory view showing the configuration of a server device according to the second embodiment;
Fig. 17 is a flowchart showing a substance of an unmanned driving process according to the second embodiment;
Fig. 18 is a first explanatory view schematically showing a learned model according to another embodiment; and
Fig. 19 is a second explanatory view schematically showing a learned model according to another embodiment.

DETAILED DESCRIPTION

A. First Embodiment

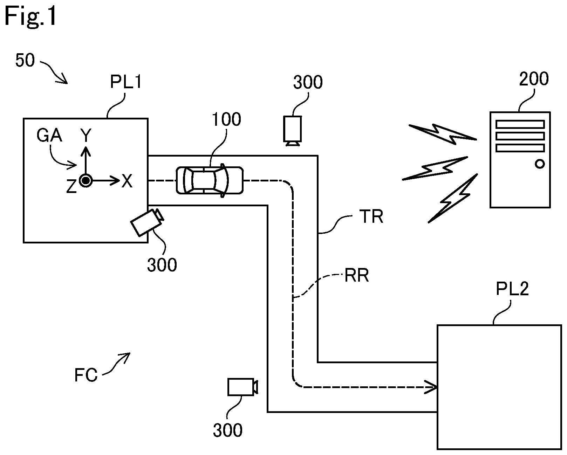

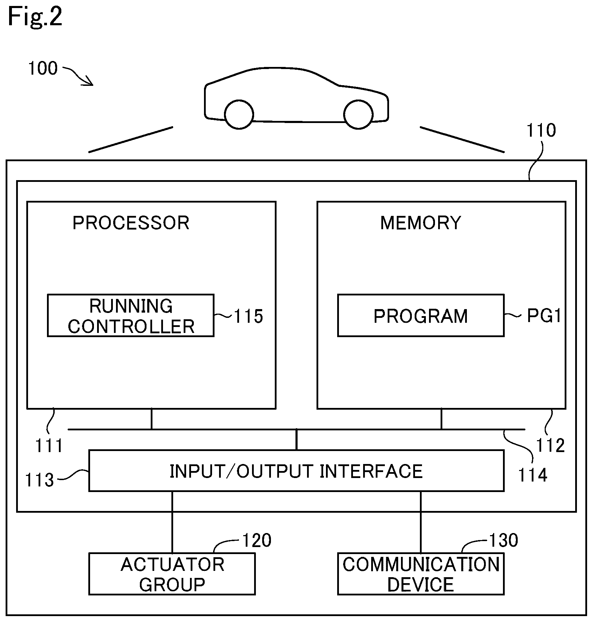

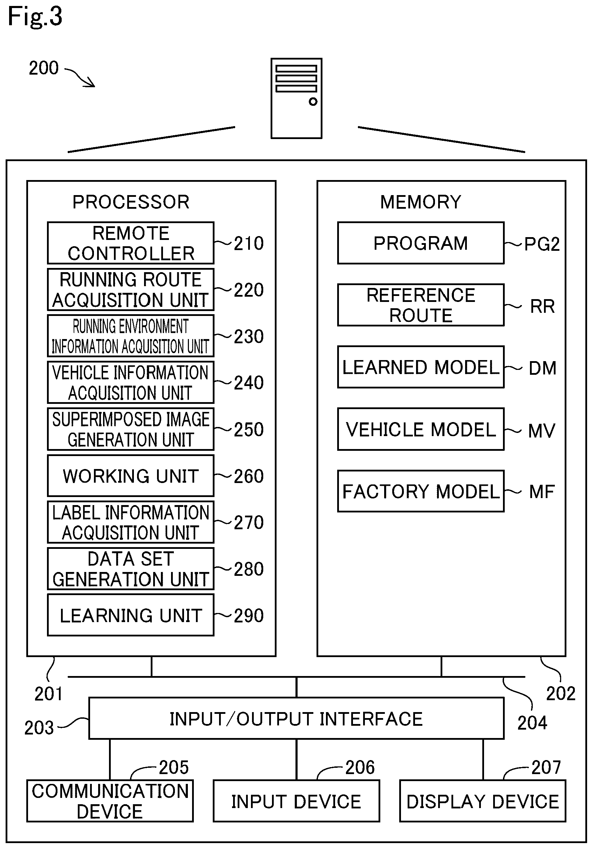

Fig. 1 is an explanatory view showing the configuration of a system 50 according to a first embodiment. Fig. 2 is an explanatory view showing the configuration of a vehicle 100 according to the first embodiment. Fig. 3 is an explanatory view showing the configuration of a server device 200 according to the first embodiment. As shown in Fig. 1, in the present embodiment, the system 50 includes the vehicle 100 as a moving object, the server device 200, and at least one external camera 300.

In the present disclosure, the "moving object" means an object capable of moving, and is a vehicle or an electric vertical takeoff and landing aircraft (so-called flying-automobile), for example. The vehicle may be a vehicle to run with a wheel or may be a vehicle to run with a continuous track, and may be a passenger car, a track, a bus, a two-wheel vehicle, a four-wheel vehicle, or a construction vehicle, for example. The vehicle includes a battery electric vehicle (BEV), a gasoline automobile, a hybrid automobile, and a fuel cell automobile. When the moving object is other than a vehicle, the term "vehicle" or "car" in the present disclosure is replaceable with a "moving object" as appropriate, and the term "run" is replaceable with "move" as appropriate.

The vehicle 100 is configured to be capable of running by unmanned driving. The "unmanned driving" means driving independent of running operation by a passenger. The running operation means operation relating to at least one of "run," "turn," and "stop" of the vehicle 100. The unmanned driving is realized by automatic remote control or manual remote control using a device provided outside the vehicle 100 or by autonomous control by the vehicle 100. A passenger not involved in running operation may be on-board a vehicle running by the unmanned driving. The passenger not involved in running operation includes a person simply sitting in a seat of the vehicle 100 and a person doing work such as assembly, inspection, or operation of switches different from running operation while on-board the vehicle 100. Driving by running operation by a passenger may also be called "manned driving."

In the present specification, the "remote control" includes "complete remote control" by which all motions of the vehicle 100 are completely determined from outside the vehicle 100, and "partial remote control" by which some of the motions of the vehicle 100 are determined from outside the vehicle 100. The "autonomous control" includes "complete autonomous control" by which the vehicle 100 controls a motion of the vehicle 100 autonomously without receiving any information from a device outside the vehicle 100, and "partial autonomous control" by which the vehicle 100 controls a motion of the vehicle 100 autonomously using information received from a device outside the vehicle 100.

In the present embodiment, the system 50 is used in a factory FC for manufacture of the vehicle 100. A reference coordinate system of the factory FC is a global coordinate system GC. Specifically, it is possible to express an arbitrary location in the factory FC using X, Y, and Z coordinates in the global coordinate system GC. The factory FC has a first place PL1 and a second place PL2. The first place PL1 and the second place PL2 are connected to each other via a track TR along which the vehicle 100 is capable of running. The factory FC is provided with a plurality of external cameras 300 installed along the track TR. The external camera 300 includes a communication device not shown in the drawings to allow communication with the server device 200 via wired communication or radio communication. The location and position of each of the external cameras 300 in the factory FC are adjusted in advance. The vehicle 100 moves by unmanned driving from the first place PL1 to the second place PL2 along the track TR.

As shown in Fig. 2, the vehicle 100 includes a vehicle control device 110 for controlling each part of the vehicle 100, an actuator group 120 to be driven under control by the vehicle control device 110, and a communication device 130 for communicating with the server device 200 via radio communication. The actuator group 120 includes at least one actuator. In the present embodiment, the actuator group 120 includes an actuator of a driving device for accelerating the vehicle 100, an actuator of a steering device for changing a traveling direction of the vehicle 100, and an actuator of a braking device for decelerating the vehicle 100. The driving device includes a battery, a motor for running to be driven by power of the battery, and a wheel to be rotated by the motor for running. The motor for running is a part of the actuator of the driving device.

The vehicle control device 110 is configured using a computer including a processor 111, a memory 112, an input/output interface 113, and an internal bus 114. The processor 111, the memory 112, and the input/output interface 113 are connected via the internal bus 114 in a manner allowing bidirectional communication therebetween. The actuator group 120 and the communication device 130 are connected to the input/output interface 113.

The processor 111 executes a computer program PG1 stored in advance in the memory 112 to function as a running controller 115. The running controller 115 controls the actuator group 120, thereby causing the vehicle 100 to run. When a passenger is on-board the vehicle 100, the running controller 115 allows the vehicle 100 to run by controlling the actuator group 120 in response to operation by the passenger. In the present embodiment, independently of whether a passenger is on-board the vehicle 100, the running controller 115 allows the vehicle 100 to run by controlling the actuator group 120 in response to a running control signal received from the server device 200. In the present embodiment, the running control signal includes an acceleration and a rudder angle of the vehicle 100 as parameters. In other embodiments, the running control signal may include a speed of the vehicle 100 as a parameter in addition to an acceleration of the vehicle 100 or instead of an acceleration of the vehicle 100.

As shown in Fig. 3, the server device 200 is configured using a computer including a processor 201, a memory 202, an input/output interface 203, and an internal bus 204. The processor 201, the memory 202, and the input/output interface 203 are connected via the internal bus 204 in a manner allowing bidirectional communication therebetween. A communication device 205 for communicating with the vehicle 100 via radio communication is connected to the input/output interface 203. In the present embodiment, the communication device 205 is capable of communicating with the external camera 300 via wired communication or radio communication. In addition to the communication device 205, an input device 206 and a display device 207 are connected to the input/output interface 203. The input device 206 is a mouse and a keyboard, for example. The display device 207 is a liquid crystal display device, for example.

The processor 201 executes a computer program PG2 stored in advance in the memory 202 to function as a remote controller 210, a running route acquisition unit 220, a running environment information acquisition unit 230, a vehicle information acquisition unit 240, a superimposed image generation unit 250, a working unit 260, a label information acquisition unit 270, a data set generation unit 280, and a learning unit 290. In some cases, the running route acquisition unit 220 is called a moving route acquisition unit, the running environment information acquisition unit 230 is called a moving environment information acquisition unit, and the vehicle information acquisition unit 240 is called a moving object information acquisition unit.

The remote controller 210 controls the vehicle 100 remotely to cause the vehicle 100 to run. In the present embodiment, the remote controller 210 controls the vehicle 100 remotely in such a manner that the vehicle 100 runs along a reference route RR stored in advance in the memory 202. The remote controller 210 acquires vehicle location information including the location and position of the vehicle 100 using a learned model DM stored in advance in the memory 202 and a captured image acquired from the external camera 300, and controls the vehicle 100 remotely using the vehicle location information and the reference route RR. The learned model DM is prepared in advance for each of the external cameras 300.

The running route acquisition unit 220 acquires a running route of the vehicle 100. In the present embodiment, the running route acquisition unit 220 acquires the reference route RR stored in advance in the memory 202 as the running route of the vehicle 100.

The running environment information acquisition unit 230 acquires running environment information representing an appearance of an environment related to running of the vehicle 100. The running environment information is an image representing the appearance of the environment related to running of the vehicle 100 or three-dimensional data representing the appearance of the environment related to running of the vehicle 100. In the present embodiment, the running environment information acquisition unit 230 acquires a factory model MF stored in advance in the memory 202 as the running environment information. The factory model MF is three-dimensional data representing an appearance of the factory FC as an environment related to running of the vehicle 100. The appearance of the factory FC includes an appearance of a building of the factory FC, an appearance of each type of facility installed inside or outside the building of the factory FC, an appearance of a road surface of the track TR in the factory FC, etc.

The vehicle information acquisition unit 240 acquires vehicle information representing an appearance of the vehicle 100. The vehicle information is an image representing the appearance of the vehicle 100 or three-dimensional data representing the appearance of the vehicle 100. In the present embodiment, the vehicle information acquisition unit 240 acquires a vehicle model MV stored in advance in the memory 202 as the vehicle information. The vehicle model MV is three-dimensional data representing the appearance of the vehicle 100.

The vehicle model MV and the factory model MF are generated using three-dimensional CAD software or three-dimensional CG software, for example. The vehicle model MV and the factory model MF may be generated on the server device 200 or on a computer different from the server device 200. Preferably, an appearance of the vehicle model MV is the most accurate reproduction possible of the appearance of the vehicle 100. Preferably, an appearance of the factory model MF is the most accurate reproduction possible of the appearance of the factory FC.

The superimposed image generation unit 250 generates a superimposed image by superimposing the vehicle information and the running environment information on each other. In the present embodiment, the superimposed image generation unit 250 generates a superimposed image by superimposing the vehicle model MV and the factory model MF on each other, and outputs the generated superimposed image.

The working unit 260 performs work on at least one of the vehicle information, the running environment information, and the superimposed image. The work may include at least one of addition or change of light to be applied to the vehicle 100 and addition or change of shading of the vehicle 100. The work may include change of at least one of lightness, saturation, and contrast. In the present embodiment, the working unit 260 is capable of changing the color or texture of at least a part of the vehicle 100 represented in the vehicle model MV by conducting the work on the vehicle model MV. The working unit 260 is capable of changing the color or texture of at least a part of the factory FC represented in the factory model MF by conducting the work on the factory model MF. The working unit 260 is capable of changing at least one of lightness, saturation, and contrast in at least a part of the superimposed image by conducting the work on the superimposed image.

The label information acquisition unit 270 acquires label information about at least one of the location and position of the vehicle 100. The label information is used as a correct answer label for supervised machine learning.

The data set generation unit 280 generates a learning data set including the superimposed image and the label information associated with this superimposed image.

The learning unit 290 generates the learned model DM by performing machine learning using a learning data set group including at least one learning data set.

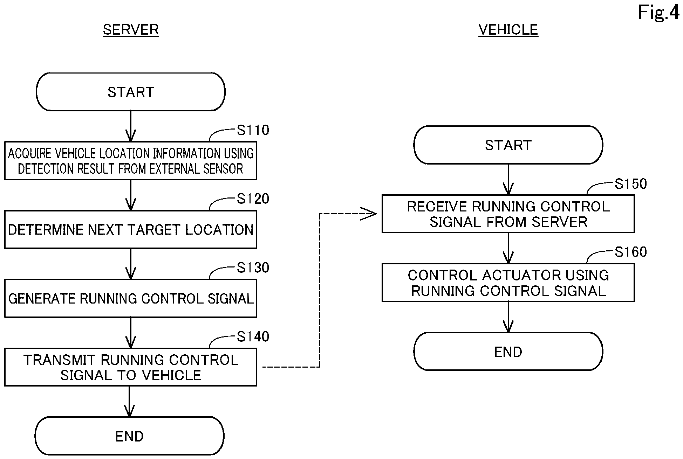

Fig. 4 is a flowchart showing a substance of an unmanned driving process according to the present embodiment. In the present embodiment, the unmanned driving process is performed by the remote controller 210 of the server device 200 and the running controller 115 of the vehicle 100. In step S110, the remote controller 210 acquires vehicle location information about the vehicle 100 using a captured image output from the external camera 300 and the learned model DM. The vehicle location information is location information functioning as a basis for generating a running control signal. In the present embodiment, the vehicle location information includes the location and position of the vehicle 100 in the global coordinate system GC of the factory FC.

More specifically, in step S110, the remote controller 210 acquires shape data about a contour of the vehicle 100 from the captured image using the learned model DM that employs artificial intelligence, for example, calculates the coordinates of a positioning point of the vehicle 100 in a coordinate system of the captured image, namely, in a local coordinate system of the factory FC, and converts the calculated coordinates to coordinates in the global coordinate system GC, thereby acquiring the location of the vehicle 100. In the present embodiment, the learned model DM is generated in advance by a learned model generating method described later and stored in the memory 202. The remote controller 210 acquires the position of the vehicle 100 through estimation using an optical flow method, and on the basis of the position of a moving vector of the vehicle 100 calculated from change of the location of a feature point of the vehicle 100 between frames of the captured image, for example.

In step S120, the remote controller 210 determines a target location to which the vehicle 100 is to move next. In the present embodiment, the target location is expressed by X, Y, and Z coordinates in the global coordinate system. The memory 202 of the server device 200 contains the reference route RR stored in advance as a route along which the vehicle 100 is to run. The route is expressed by a node indicating a departure place, a node indicating a way point, a node indicating a destination, and a link connecting nodes to each other. The remote controller 210 determines the target location to which the vehicle 100 is to move next using the vehicle location information and the reference route RR. The remote controller 210 determines the target location on the reference route RR ahead of a current location of the vehicle 100.

In step S130, the remote controller 210 generates a running control signal for causing the vehicle 100 to run toward the determined target location. In the present embodiment, the running control signal includes an acceleration and a steering angle of the vehicle 100 as parameters. The remote controller 210 calculates a running speed of the vehicle 100 from transition of the location of the vehicle 100 and makes comparison between the calculated running speed and a target speed of the vehicle 100 determined in advance. If the running speed is lower than the target speed, the remote controller 210 generally determines an acceleration in such a manner as to accelerate the vehicle 100. If the running speed is higher than the target speed as, the remote controller 210 generally determines an acceleration in such a manner as to decelerate the vehicle 100. If the vehicle 100 is on the reference route RR, The remote controller 210 determines a steering angle and an acceleration in such a manner as to prevent the vehicle 100 from deviating from the reference route RR. If the vehicle 100 is not on the reference route RR, in other words, if the vehicle 100 deviates from the reference route RR, the remote controller 210 determines a steering angle and an acceleration in such a manner as to return the vehicle 100 to the reference route RR. In other embodiments, the running control signal may include the speed of the vehicle 100 as a parameter instead of or in addition to the acceleration of the vehicle 100.

In step S140, the remote controller 210 transmits the generated running control signal to the vehicle 100. The remote controller 210 repeats the acquisition of vehicle location information, the determination of a target location, the generation of a running control signal, the transmission of the running control signal, and others in a predetermined cycle.

In step S150, the running controller 115 of the vehicle 100 receives the running control signal transmitted from the server device 200. In step S160, the running controller 115 controls the actuator group 120 using the received running control signal, thereby causing the vehicle 100 to run at the acceleration and the steering angle indicated by the running control signal. The running controller 115 repeats the reception of a running control signal and the control over the actuator group 120 in a predetermined cycle.

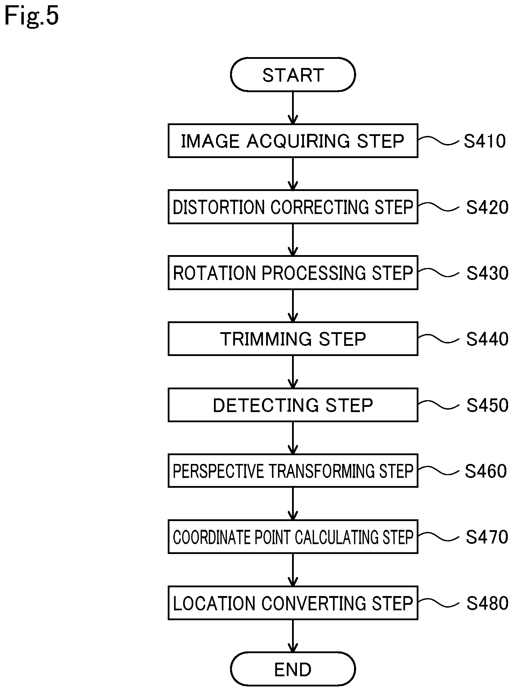

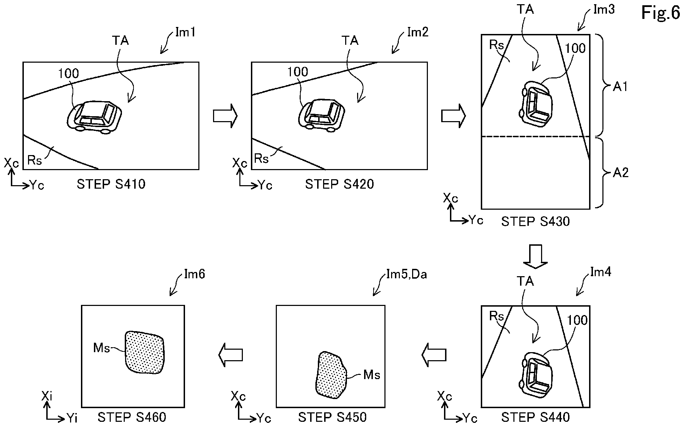

A method of acquiring the vehicle location information in step S110 in Fig. 4 will be described in more detail. Fig. 5 is a flowchart showing an example of a method of generating shape data and an example of the method of acquiring the location of the vehicle 100 using the shape data. Fig. 6 is a schematic view showing examples of various types of images Im1 to Im6 resulting from implementation of the methods shown in Fig. 5. Fig. 6 shows step numbers corresponding to those of steps in Fig. 5. In the present embodiment, a positioning point 10e of the vehicle 100 is a rear end on the left side of the vehicle 100. The positioning point 10e of the vehicle 100 may be a point other than the rear end on the left side of the vehicle 100.

In an image acquiring step (step S410) shown in Fig. 5, the remote controller 210 acquires an original image Im1 output from the external camera 300. In a distortion correcting step (step S420), the remote controller 210 corrects distortion in the original image Im1 to generate a corrected image Im2 as a worked image. In a rotation processing step (step S430), the remote controller 210 rotates the corrected image Im2. By doing so, the remote controller 210 generates a rotated image Im3 as a worked image. In a trimming step (step S440), of all regions forming the rotated image Im3, the remote controller 210 trims an unnecessary region A2 other than a necessary region A1 composed of the vehicle 100 and a peripheral region around the vehicle 100 from the rotated image Im3. By doing so, the remote controller 210 generates a processed image Im4 as a worked image. The steps from step S420 to step S440 are preprocessing steps for increasing detection accuracy during detection of the vehicle 100 from each of the captured images Im1 to Im4. Thus, at least one of the processes from step S420 to step S440 is omissible.

In a detecting step (step S450), the remote controller 210 inputs the processed image Im4 to the learned model DM. By doing so, the remote controller 210 detects the vehicle 100 from the processed image Im4 to acquire a first mask image Im5 as shape data Da. The first mask image Im5 is an image with a mask region Ms added to the processed image Im4 by masking a region belonging to all regions forming the processed image Im4 and representing the vehicle 100.

In a perspective transforming step (step S460), the remote controller 210 perspective transforms the first mask image Im5 to generate a second mask image Im6. For example, the remote controller 210 perspective transforms the first mask image Im5 to an overhead image taken in a view from above the vehicle 100 substantially vertical to a road surface Rs using a predetermined perspective transformation parameter. The perspective transformation parameter is a parameter relating to location information and an internal parameter about the external camera 300 obtained through calibration, for example. In this way, the remote controller 210 generates the second mask image Im6 represented in a local coordinate system from the first mask image Im5 represented in a camera coordinate system. The camera coordinate system is a coordinate system having an origin defined by a focal point of the external camera 300, and coordinate axes represented by an Xc axis and a Yc axis perpendicular to the Xc axis. The local coordinate system is a coordinate system having an origin defined by one point on an image plane, and coordinate axes represented by an Xi axis and a Yi axis perpendicular to the Xi axis.

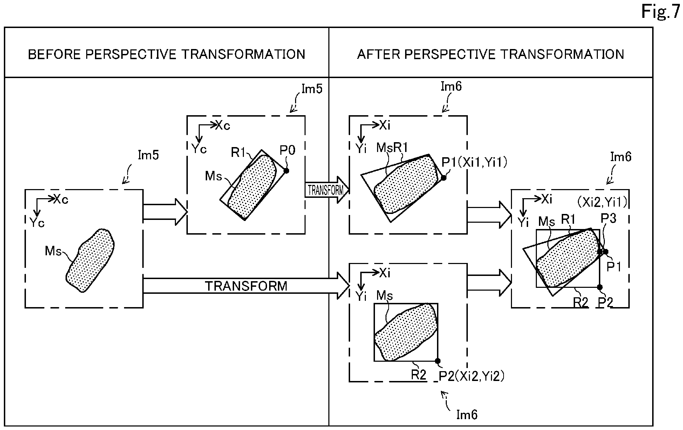

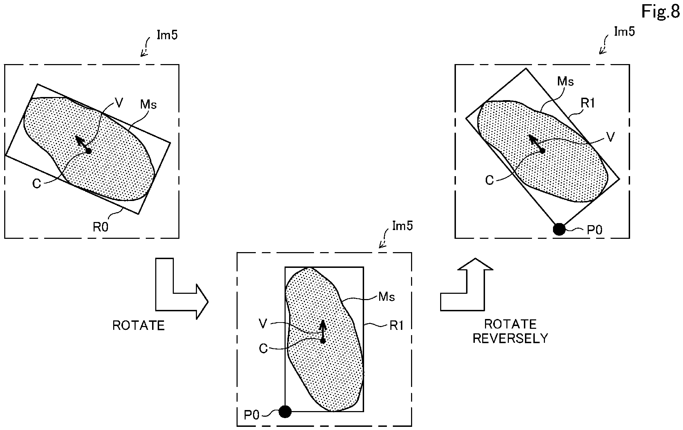

In a coordinate point calculating step (step S470), the remote controller 210 calculates a local coordinate point representing the location of the vehicle 100 in the local coordinate system. Fig. 7 is an explanatory view for explaining details of the coordinate point calculating step. In order to calculate the local coordinate point, the remote controller 210 first calculates a base coordinate point P0 from a first circumscribed rectangle R1 set at the mask region Ms in the first mask image Im5 as an image before the perspective transformation. Fig. 8 is an explanatory view for explaining a method of calculating the base coordinate point P0. In order to calculate the base coordinate point P0, the remote controller 210 sets a base circumscribed rectangle R0 at the mask region Ms in the first mask image Im5. Next, the remote controller 210 rotates the first mask image Im5 to a required rotation amount about a barycenter C of the mask region Ms as a rotation center in such a manner that a direction of a moving vector V of the vehicle 100 corresponding to the mask region Ms in the first mask image Im5 is pointed in a predetermined direction. The predetermined direction is an upward direction on a screen of a display device on which the first mask image Im5 is displayed, for example. Next, the remote controller 210 sets the first circumscribed rectangle R1 at the mask region Ms in the rotated first mask image Im5 in such a manner that the first circumscribed rectangle R1 has long sides parallel to the moving vector V. Next, the remote controller 210 rotates the first mask image Im5 including the added first circumscribed rectangle R1 reversely to the same rotation amount as above about the barycenter C of the mask region Ms as a rotation center. By doing so, the remote controller 210 sets a coordinate point as the base coordinate point P0 that is about one vertex of the four vertexes of the first circumscribed rectangle R1, which is a vertex having a coordinate of the shortest distance to the positioning point 10e of the vehicle 100.

Next, as shown in Fig. 7, the remote controller 210 perspective transforms the reversely rotated first mask image Im5, namely, the first mask image Im5 where the base coordinate point P0 has been calculated. By doing so, the remote controller 210 sets a coordinate point corresponding to the base coordinate point P0 as a first coordinate point P1 at the first circumscribed rectangle R1 transformed by the perspective transformation.

Next, the remote controller 210 sets a second circumscribed rectangle R2 at the mask region Ms in the second mask image Im6 resulting from the perspective transformation of the first mask image Im5. Then, the remote controller 210 sets a vertex as a second coordinate point P2 representing the same location as the first coordinate point P1, which is a vertex of the vertexes of the second circumscribed rectangle R2. Specifically, the first coordinate point P1 and the second coordinate point P2 are coordinate points representing the same location, so that these coordinate points have correlation with each other.

Next, the remote controller 210 makes a correction of replacing the coordinates (Xi1, Yi1) of the first coordinate point P1 with the coordinates (Xi2, Yi2) of the second coordinate point P2 in response to a magnitude relationship between a coordinate value of the first coordinate point P1 and a coordinate value of the second coordinate point P2. If the coordinate value Xi1 of the first coordinate point P1 in the Xi direction is larger than the coordinate value Xi2 of the second coordinate point P2 in the Xi direction (Xi1 > Xi2), the remote controller 210 replaces the coordinate value Xi1 of the first coordinate point P1 in the Xi direction with the coordinate value Xi2 of the second coordinate point P2 in the Xi direction. If the coordinate value Yi1 of the first coordinate point P1 in the Yi direction is larger than the coordinate value Yi2 of the second coordinate point P2 in the Yi direction (Yi1 > Yi2), the remote controller 210 replaces the coordinate value Yi1 of the first coordinate point P1 in the Yi direction with the coordinate value Yi2 of the second coordinate point P2 in the Yi direction. In the illustration in Fig. 7, the coordinate value Xi1 of the first coordinate point P1 in the Xi direction is larger than the coordinate value Xi2 of the second coordinate point P2 in the Xi direction. Furthermore, the coordinate value Yi1 of the first coordinate point P1 in the Yi direction is smaller than the coordinate value Yi2 of the second coordinate point P2 in the Yi direction. As a result, a local coordinate point P3 is given coordinates (Xi2, Yi1). In this way, the remote controller 210 corrects the first coordinate point P1 using the second coordinate point P2 to calculate the local coordinate point P3 representing the location of the vehicle 100 in the local coordinate system.

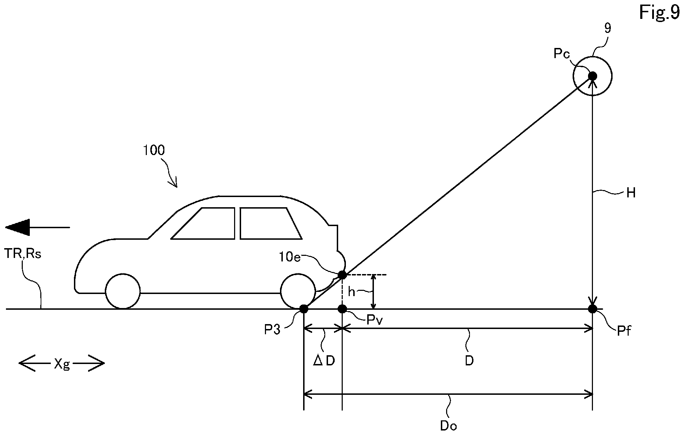

In a location converting step (step S480), the remote controller 210 converts the local coordinate point P3 to a vehicle coordinate point, thereby calculating a vehicle coordinate point representing the location of the positioning point 10e of the vehicle 100 in the global coordinate system GC. The remote controller 210 converts the local coordinate point P3 to the vehicle coordinate point using relational expressions (1) to (3) described later including the vehicle coordinate point as an objective variable and including the local coordinate point P3, an image capturing parameter, and a vehicle parameter as explanatory variables. The image capturing parameter is a parameter relating to a distance of the external camera 300 from a predetermined reference point. In the present embodiment, the image capturing parameter is a height H of the external camera 300 from the road surface Rs (Fig. 9 referred to later). The vehicle parameter is a parameter relating to a distance of the positioning point 10e of the vehicle 100 from the reference point. In the present embodiment, the vehicle parameter is a height h of the positioning point 10e of the vehicle 100 from the road surface Rs (Fig. 9 referred to later).

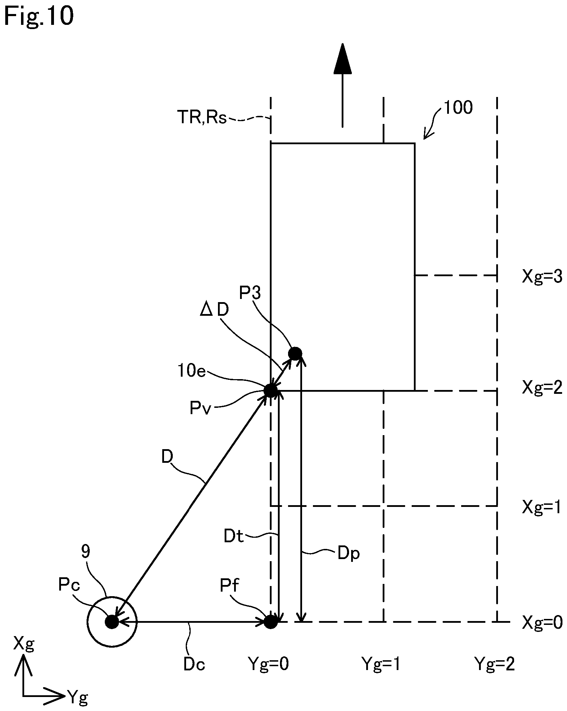

Fig. 9 is a first explanatory view for explaining details of the location converting step. Fig. 9 illustrates a state where the vehicle 100 is viewed from a left side. Fig. 10 is a second explanatory view for explaining details of the location converting step. Fig. 10 illustrates a state where the vehicle 100 is viewed from a roof side. The global coordinate system GC shown in each of Figs. 9 and 10 is a coordinate system having an origin defined by a fixed coordinate point Pf representing an arbitrary reference location on the road surface Rs, and coordinate axes represented by an Xg axis and a Yg axis perpendicular to the Xg axis. An image capturing coordinate point Pc is a coordinate point representing the location of the external camera 300 in the global coordinate system GC having output the original image Im1 used for the calculation of the local coordinate point P3. The fixed coordinate point Pf and the image capturing coordinate point Pc are stored in advance in the memory 202, for example.

As shown in Fig. 9, an observation distance on an XgYg plane between the location of the external camera 300 and the location of the vehicle 100 (local coordinate point P3) is defined as Do. An observation error is defined as deltaD. A height [m] of the external camera 300 from the road surface Rs as the image capturing parameter is defined as H. A height [m] of the positioning point 10e of the vehicle 100 from the road surface Rs as the vehicle parameter is defined as h. In this case, the observation error deltaD is expressed by the following expression (1):

$$\text{deltaD} = h/H \times Do \qquad \ldots \text{ expression (1)}$$

Specifically, the observation error deltaD becomes larger as the observation distance Do becomes longer.

With an actual distance between the location of the external camera 300 and the location of the positioning point 10e of the vehicle 100 defined as a first distance D, the first distance D is expressed by the following expression (2):

$$D = Do \times (1 - h/H) \qquad \ldots \text{ expression (2)}$$

Specifically, the first distance D is determined by the observation distance Do, the height H of the external camera 300 as the image capturing parameter, and the height h of the positioning point 10e of the vehicle 100 as the vehicle parameter.

As shown in Fig. 10, with a distance between the reference location and an estimated location of the vehicle 100 defined as an estimated distance Dp and with an actual distance between the reference location and the vehicle 100 defined as a second distance Dt, the second distance Dt is expressed by the following expression (3):

$$Dt = Dp \times (1 - h/H) \qquad \ldots \text{ expression (3)}$$

Here, it is possible to calculate the estimated distance Dp using a third distance Dc that is an actual distance obtained from the fixed coordinate point Pf and the image capturing coordinate point Pc, the local coordinate point P3, and the fixed coordinate point Pf. Thus, the remote controller 210 calculates a vehicle coordinate point Pv using the second distance Dt obtained by correcting the estimated distance Dp by the foregoing expression (3) and using the fixed coordinate point Pf. The vehicle coordinate point Pv calculated at this time is a coordinate point representing the location of the positioning point 10e of the vehicle 100 in the global coordinate system GC, so that the vehicle coordinate point Pv corresponds to the location of the vehicle 100 in real space.

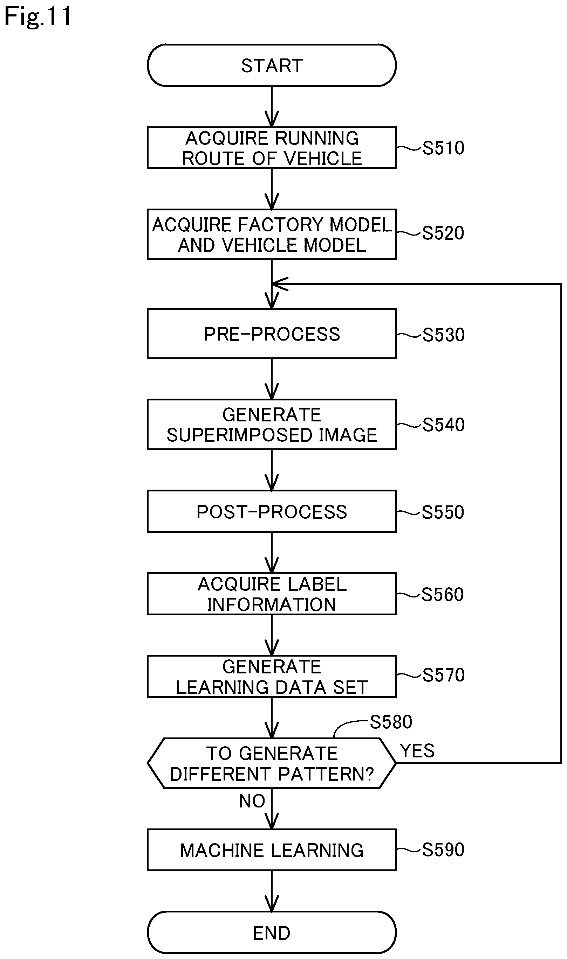

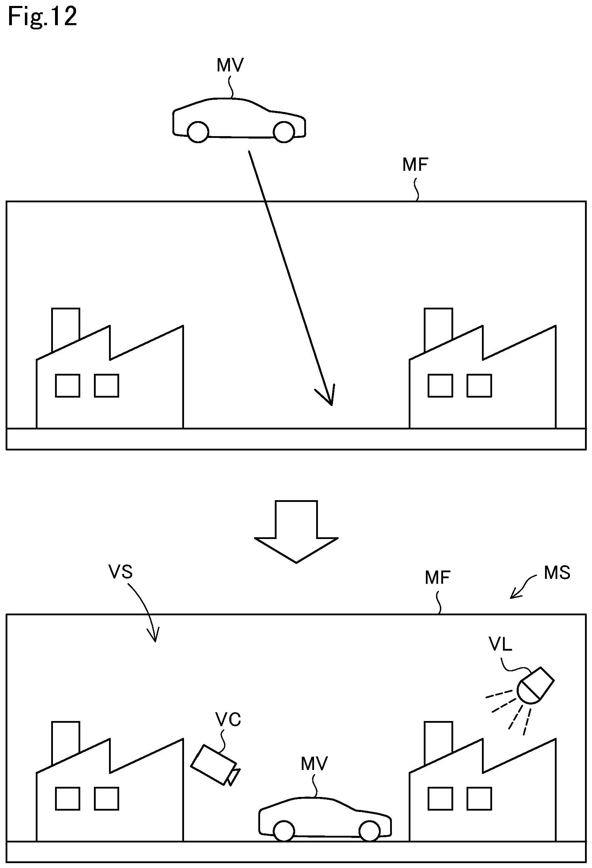

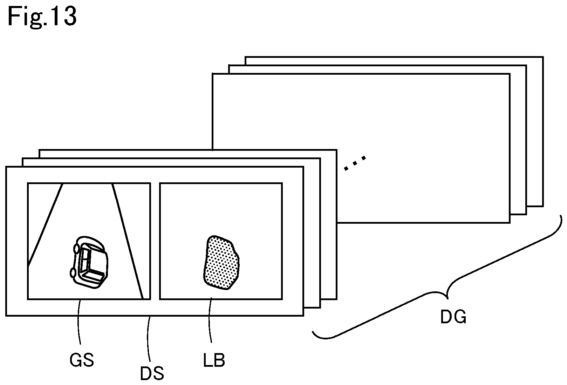

Fig. 11 is a flowchart showing a substance of a learned model generating method including a learning data set generating method according to the present embodiment. Fig. 12 is an explanatory view schematically showing how the factory model MF and the vehicle model MV are superimposed on each other. Fig. 13 is an explanatory view schematically showing a learning data set group DG. In the present embodiment, the learned model generating method is implemented by the processor 201 of the server device 200. First, in step S510, the running route acquisition unit 220 acquires a running route of the vehicle 100 in reality space. In the present embodiment, the running route acquisition unit 220 acquires the reference route RR stored in the memory 202 as the running route of the vehicle 100 in reality space. Step S510 may be called a running route acquiring step or a moving route acquiring step.

In step S520, the running environment information acquisition unit 230 acquires running environment information representing an appearance of an environment related to running of the vehicle 100, and the vehicle information acquisition unit 240 acquires vehicle information representing an appearance of the vehicle 100. In the present embodiment, the running environment information acquisition unit 230 acquires the factory model MF stored in advance in the memory 202 as the running environment information, and the vehicle information acquisition unit 240 acquires the vehicle model MV stored in advance in the memory 202 as the vehicle information.

In step S530, the working unit 260 conducts work as a pre-process on at least one of the vehicle model MV and the factory model MF as needed. For example, the working unit 260 is capable of changing the color or texture of at least a part of the vehicle 100 represented in the vehicle model MV by conducting work on the vehicle model MV. The working unit 260 may change the color of a door mirror or a roof of the vehicle model MV, for example. The working unit 260 may conduct work of changing the texture of the vehicle model MV from a metallic texture to a matte texture through texture mapping, for example. Changing the texture of the vehicle model MV makes it possible to change highlight or shading generated on a surface of the vehicle model MV with light to be applied to the vehicle model MV from a virtual light source VL during rendering described later. For example, the working unit 260 is capable of changing the color or texture of at least a part of the factory FC represented in the factory model MF by conducting work on the factory model MF. The process in step S530 is omissible.

In step S540, the superimposed image generation unit 250 generates a superimposed image GS by superimposing the vehicle model MV and the factory model MF on each other. More specifically, as shown in Fig. 12, the superimposed image generation unit 250 places the factory model MF and the vehicle model MV in virtual space VS to superimpose the vehicle model MV and the factory model MF on each other. In the following description, three-dimensional data obtained by superimposing the vehicle model MV and the factory model MF on each other will be called a superimposed model MS. The superimposed image generation unit 250 generates the superimposed image GS from the superimposed model MS through the rendering. The rendering means generation of a two-dimensional image from three-dimensional data. Preferably, physically-based rendering is employed as a technique of the rendering used in generating the superimposed image GS. The physically-based rendering allows the most accurate reproduction possible of the behavior of light in reality space. The virtual space VS includes a virtual viewpoint VC and the virtual light source VL in addition to the vehicle model MV and the factory model MF. The virtual viewpoint VC is placed in such a manner as to make a match between the locations and positions of the factory model MF and the virtual viewpoint VC relative to each other in the virtual space VS and the locations and positions of the factory FC and the external camera 300 relative to each other in reality space. Preferably, the virtual light source VL is placed at the location of a light source in reality space. The virtual space VS may include a plurality of the virtual light sources VL. If the factory FC in reality space has a plurality of lighting facilities, for example, the virtual light source VL may be placed at the location of each of the lighting facilities. The superimposed model MS viewed from the virtual viewpoint VC is represented in the superimposed image GS. Shading resulting from light applied from the virtual light source VL to the superimposed model MS is represented in the superimposed image GS. Step S540 may be called a superimposed image generating step.

In step S550, the working unit 260 conducts work as a post-process on the superimposed image GS as needed. For example, the working unit 260 is capable of changing at least one of lightness, saturation, and contrast in at least a part of the superimposed image GS by conducting work on the superimposed image GS. The process in step S550 is omissible.

In step S560, the label information acquisition unit 270 acquires label information LB about the location and position of the vehicle 100. In the present embodiment, the label information acquisition unit 270 acquires information about the mask region Ms as the label information LB used for acquiring the location and position of the vehicle 100. The label information acquisition unit 270 is capable of acquiring the mask region Ms by acquiring information about a pixel belonging to a plurality of pixels forming the superimposed image GS and corresponding to the drawn vehicle model MV, for example. Step S560 may be called a label information acquiring step.

In step S570, the data set generation unit 280 generates a learning data set DS including the superimposed image GS and the label information LB. As shown in Fig. 13, in the present embodiment, the learning data set DS includes one superimposed image GS, and one piece of the label information LB corresponding to this superimposed image GS. Step S570 may be called a learning data set generating step.

In step S580, the data set generation unit 280 judges whether to generate the learning data set DS of a different pattern. For example, if generation of the learning data sets DS of a predetermined number has not been finished, the data set generation unit 280 judges that the learning data set DS of a different pattern is to be generated. If generation of the learning data sets DS of the predetermined number has been finished, the data set generation unit 280 judges that the learning data set DS of a different pattern is not to be generated.

If it is judged in step S580 that the learning data set DS of a different pattern is to be generated, the processes from step S530 to step S580 are performed to generate the learning data set DS of a different pattern. The processes from step S530 to step S580 are repeated until it is judged in step S580 that the learning data set DS of a different pattern is not to be generated. The learning data sets DS of different patterns include the superimposed images GS different from each other. In the present embodiment, the superimposed image generation unit 250 makes a difference in the location of the vehicle 100 in a direction parallel to a running route between at least two of a plurality of the superimposed images GS. Additionally, in the present embodiment, the superimposed image generation unit 250 makes a difference in the location of the vehicle 100 in a direction vertical to the running route between at least two of the plurality of superimposed images GS. The direction vertical to the running route mentioned herein is not a direction vertical to a road surface of the track TR but a direction parallel to the road surface of the track TR. Additionally, in the present embodiment, the superimposed image generation unit 250 makes a difference in the position of the vehicle 100 relative to the running route between at least two of the plurality of superimposed images GS. The superimposed image generation unit 250 makes a difference in the location or position of the vehicle 100 in the superimposed image GS by changing the location or position of the vehicle model MV relative to the factory model MF. For example, the superimposed image generation unit 250 generates 10 patterns by making differences in the location of the vehicle 100 in the direction parallel to the running route, 10 patterns by making differences in the location of the vehicle 100 in the direction vertical to the running route, and 10 patterns by making differences in the position of the vehicle 100 between all the locations, thereby generating superimposed images of 1000 patterns in total determined by $10 \times 10 \times 10$. The working unit 260 may make a difference in color in at least a partial area between at least two of the plurality of superimposed images GS. In this case, the superimposed image generation unit 250 further generates 10 patterns of different colors on the basis of the 1000 patterns differing from each other in the location or position of the vehicle 100, thereby generating superimposed images of 10000 patterns determined by $1000 \times 10$, for example. The label information acquisition unit 270 acquires label information responsive to each superimposed image GS.

In step S590, the learning unit 290 performs machine learning using the learning data set group DG including the plurality of learning data sets DS, thereby generating the learned model DM. In the present embodiment, the learning unit 290 stores the generated learned model DM into the memory 202. For example, the learned model DM to be used may be a convolution neural network (hereinafter called CNN) to realize either semantic segmentation or instance segmentation. During learning using the CNN, a parameter for the CNN is updated through backpropagation in such a manner as to reduce errors between output results obtained by using the learned model DM and a correct answer label. Step S590 may be called a learning step.

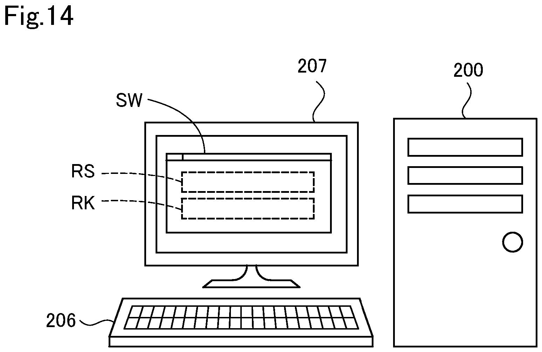

Fig. 14 is an explanatory view schematically showing a selection screen SW. The selection screen SW has a superimposing condition selection region RS for selection of a superimposing condition, and a working condition selection region RK for selection of a working condition. The superimposing condition is a condition for superimposing the vehicle information and the running environment information on each other. In step S540 in Fig. 11, the superimposed image generation unit 250 superimposes the vehicle information and the running environment information on each other in response to a superimposing condition selected in the superimposing condition selection region RS. The superimposing condition includes a condition relating to the location of the vehicle model MV relative to the factory model MF and a condition relating to the position of the vehicle model MV relative to the factory model MF, for example. The working condition includes a condition for conducting work on at least one of the vehicle information, the running environment information, and the superimposed image. In step S530 or step S550 in Fig. 11, the working unit 260 conducts work on at least one of the vehicle information, the running environment information, and the superimposed image in response to a working condition selected in the working condition selection region RK. The working condition includes a condition relating to the color of the vehicle 100, for example. The working condition may include a condition relating to weather at the factory FC, for example. The working condition selection region RK may be configured to allow selection between fine weather and rainy weather, for example. If rainy weather is selected, the working unit 260 may darken the virtual light source VL compared to a case where fine weather is selected. In another case, the working condition selection region RK may be configured to allow selection of the longitude and latitude of the factory FC, clock time, and a date. The working unit 260 may acquire weather information from outside about a solar position in response to a condition selected in the working condition selection region RK, and change the location of the virtual light source VL on the basis of the weather information. In this case, it is possible to suppress reduction in the accuracy of detection of the vehicle 100 using the learned model DM to be caused by weather change. The working condition selection region RK may be configured to allow selection of a condition such as a raindrop size, an interval between raindrops, a dropping speed of raindrops, or whether water or ice, for example. In this case, it is possible to suppress reduction in the accuracy of detection of the vehicle 100 using the learned model DM on the occurrence of occlusion in the vehicle 100 due to raindrops. Selecting a dropping speed of raindrops makes it possible to select the lengths of image lags of the raindrops represented in the superimposed image.

According to the system 50 of the present embodiment described above, the superimposed image generation unit 250 generates the superimposed image GS by superimposing the vehicle model MV and the factory model MF on each other, and the data set generation unit 280 generates the learning data set DS including the superimposed image GS. By doing so, it becomes possible to eliminate the burden of acquiring an image for learning by capturing an image of the vehicle 100 placed in the factory FC in reality space, for example. This allows reduction in the burden of generating the learning data set DS. Additionally, it is possible to express a phenomenon in the superimposed image GS that is to appear at a low frequency in reality space.

B. Second Embodiment

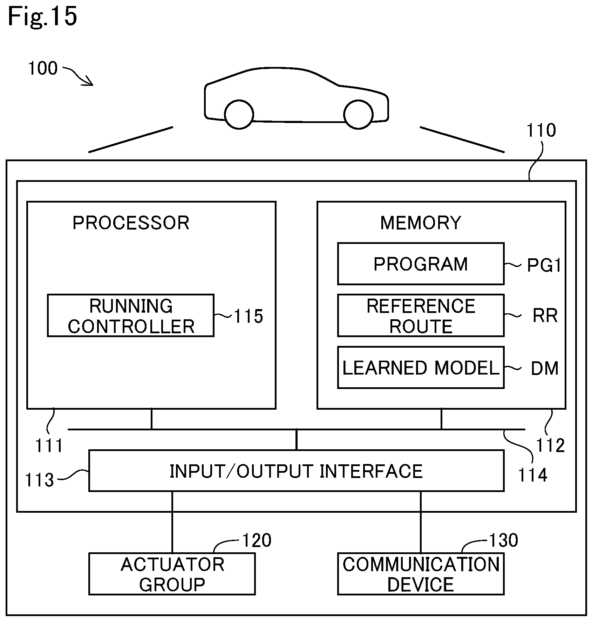

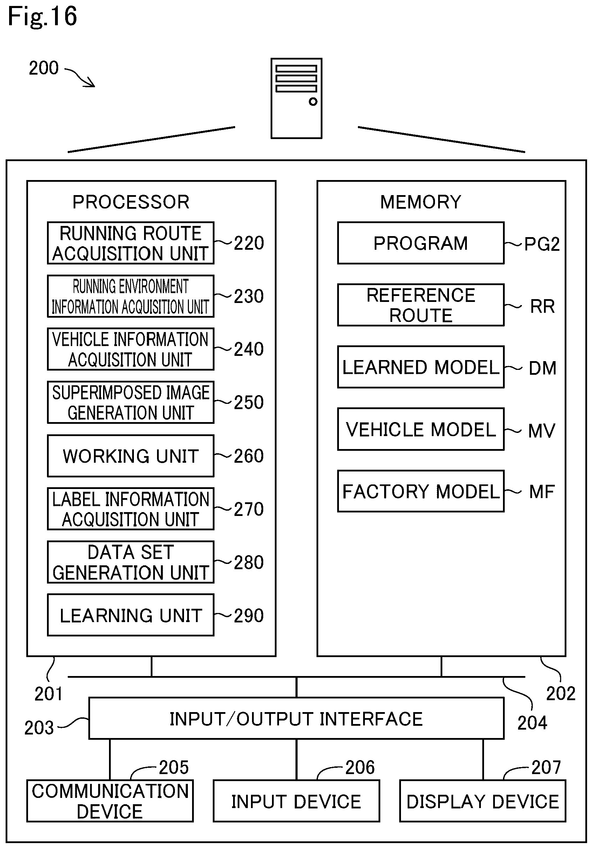

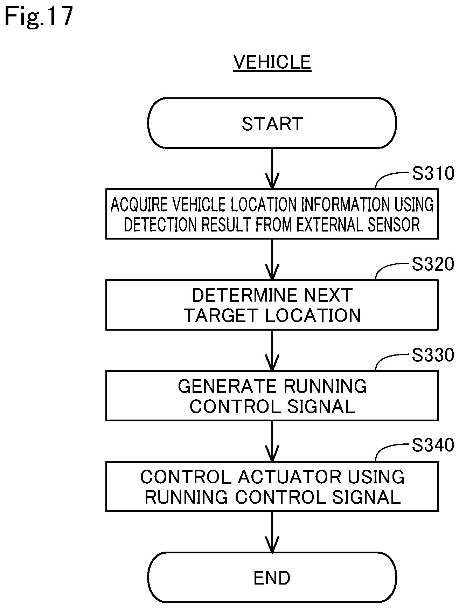

Fig. 15 is an explanatory view showing the configuration of a vehicle 100 according to a second embodiment. Fig. 16 is an explanatory view showing the configuration of a server device 200 according to the second embodiment. Fig. 17 is a flowchart showing a substance of an unmanned driving process according to the second embodiment. A system 50 according to the present embodiment differs from that of the first embodiment in that the server device 200 does not include the remote controller 210, and the vehicle 100 runs by autonomous control, not by remote control. Unless specifically stated, the second embodiment is the same as that of the first embodiment in the other configuration.

As shown in Fig. 15, the reference route RR and the learned model DM are stored in advance in the memory 112 of the vehicle control device 110. The communication device 130 is capable of communicating with the external camera 300 via radio communication. The processor 111 of the vehicle control device 110 executes the computer program PG1 stored in advance in the memory 112 to function as the running controller 115. Instead of controlling the actuator group 120 using a running control signal acquired from the outside of the vehicle 100, the running controller 115 controls the actuator group 120 using a running control signal generated by the running controller 115 itself. As shown in Fig. 16, the server device 200 executes the computer program PG2 stored in advance in the memory 202 to function as the running route acquisition unit 220, the running environment information acquisition unit 230, the vehicle information acquisition unit 240, the superimposed image generation unit 250, the working unit 260, the label information acquisition unit 270, the data set generation unit 280, and the learning unit 290. The learned model DM generated by the learning unit 290 may be transmitted via radio communication to the vehicle 100 before running of the vehicle 100 and may be stored in the memory 112 of the vehicle control device 110, for example.

As shown in Fig. 17, in the present embodiment, the unmanned driving process is performed by the running controller 115. In step S210, the running controller 115 acquires vehicle location information using a captured image output from the external camera 300 and the learned model DM. In step S220, the running controller 115 determines a target location to which the vehicle 100 is to move next using the vehicle location information and the reference route RR. In step S230, the running controller 115 generates a running control signal for causing the vehicle 100 to run toward the determined target location. In step S240, the running controller 115 controls the actuator group 120 using the generated running control signal, thereby causing the vehicle 100 to run at an acceleration and a rudder angle represented by the running control signal. The running controller 115 repeats acquisition of location information about the vehicle 100, determination of a target location, generation of a running control signal, and control over the actuator group 120 in a certain cycle.

According to the system 50 of the present embodiment described above, it is possible to cause the vehicle 100 to run by autonomous control by the vehicle 100 without controlling the vehicle 100 remotely from outside.

(C1) In the above-described first embodiment, the server device 200 performs the processing from acquisition of vehicle location information to generation of a running control signal. By contrast, the vehicle 100 may perform at least part of the processing from acquisition of vehicle location information to generation of a running control signal. For example, embodiments (1) to (3) described below are applicable, for example.

(1) The server device 200 may acquire vehicle location information, determine a target location to which the vehicle 100 is to move next, and generate a route from a current location of the vehicle 100 indicated by the acquired vehicle location information to the target location. The server device 200 may generate a route to the target location between the current location and a destination or generate a route to the destination. The server device 200 may transmit the generated route to the vehicle 100. The vehicle 100 may generate a running control signal in such a manner as to cause the vehicle 100 to run along the route received from the server device 200 and control an actuator using the generated running control signal.

(2) The server device 200 may acquire vehicle location information and transmit the acquired vehicle location information to the vehicle 100. The vehicle 100 may determine a target location to which the vehicle 100 is to move next, generate a route from a current location of the vehicle 100 indicated by the received vehicle location information to the target location, generate a running control signal in such a manner as to cause the vehicle 100 to run along the generated route, and control an actuator using the generated running control signal.

(3) In the foregoing embodiments (1) and (2), an internal sensor may be mounted on the vehicle 100, and detection result output from the internal sensor may be used in at least one of the generation of the route and the generation of the running control signal. The internal sensor is a sensor mounted on the vehicle 100. More specifically, the internal sensor might include a camera, LiDAR, a millimeter wave radar, an ultrasonic wave sensor, a GPS sensor, an acceleration sensor, and a gyroscopic sensor, for example. For example, in the foregoing embodiment (1), the server device 200 may acquire detection result from the internal sensor, and in generating the route, may reflect the detection result from the internal sensor in the route. In the foregoing embodiment (1), the vehicle 100 may acquire detection result from the internal sensor, and in generating the running control signal, may reflect the detection result from the internal sensor in the running control signal. In the foregoing embodiment (2), the vehicle 100 may acquire detection result from the internal sensor, and in generating the route, may reflect the detection result from the internal sensor in the route. In the foregoing embodiment (2), the vehicle 100 may acquire detection result from the internal sensor, and in generating the running control signal, may reflect the detection result from the internal sensor in the running control signal.

(C2) In the above-described embodiment in which the vehicle 100 can be running by autonomous control, the vehicle 100 may be equipped with an internal sensor, and detection result output from the internal sensor may be used in at least one of generation of a route and generation of a running control signal. For example, the vehicle 100 may acquire detection result from the internal sensor, and in generating the route, may reflect the detection result from the internal sensor in the route. The vehicle 100 may acquire detection result from the internal sensor, and in generating the running control signal, may reflect the detection result from the internal sensor in the running control signal.

(C3) In the above-described second embodiment, the vehicle 100 acquires vehicle location information using detection results obtained by the external camera 300. Meanwhile, the vehicle 100 may be mounted with an internal sensor, may acquire vehicle location information using detection results obtained by the internal sensor, may determine a target location to which the vehicle 100 is to move next, may generate a route from a current place of the vehicle 100 represented in the acquired vehicle location information to the target location, may generate a running control signal for running along the generated route, and may control the actuator group 120 using the generated running control signal. In this case, it is possible for the vehicle 100 to run without using any detection result from the external camera 300. The vehicle 100 may acquire target arrival time or traffic congestion information from outside the vehicle 100 and may reflect the acquired target arrival time or traffic congestion information in at least one of a route and a running control signal. In another case, the functional configuration of the system 50 may entirely be provided at the vehicle 100. Specifically, the processes realized by the system 50 in the present disclosure may be realized by the vehicle 100 alone.

(C4) In the above-described first embodiment, the server device 200 automatically generates a running control signal to be transmitted to the vehicle 100. Meanwhile, the server device 200 may generate a running control signal to be transmitted to the vehicle 100 in response to operation by an external operator existing outside the vehicle 100. For example, the external operator may operate an operating device including a display for display of a captured image output from the external camera 300, steering, an accelerator pedal, and a brake pedal for operating the vehicle 100 remotely, and a communication device for communicating with the server device 200 via wired communication or radio communication, and the server device 200 may generate a running control signal in response to operation performed on the operating device.

(C5) In each of the above-described embodiments, the vehicle 100 is simply required to have a configuration to become movable by unmanned driving. The vehicle 100 may embodied as a platform having the following configuration, for example. The vehicle 100 is simply required to include at least actuators and a controller. More specifically, in order to fulfill three functions including "run," "turn," and "stop" by unmanned driving, the actuators may include a driving device, a steering device and a braking device. The actuators are controlled by the controller that controls running of the vehicle 100. In order for the vehicle 100 to acquire information from outside for unmanned driving, the vehicle 100 is simply required to include the communication device further. Specifically, the vehicle 100 to become movable by unmanned driving is not required to be equipped with at least some of interior components such as a driver's seat and a dashboard, is not required to be equipped with at least some of exterior components such as a bumper and a fender or is not required to be equipped with a bodyshell. In such cases, a remaining component such as a bodyshell may be mounted on the vehicle 100 before the vehicle 100 is shipped from a factory, or a remaining component such as a bodyshell may be mounted on the vehicle 100 after the vehicle 100 is shipped from a factory while the remaining component such as a bodyshell is not mounted on the vehicle 100. Each of components may be mounted on the vehicle 100 from any direction such as from above, from below, from the front, from the back, from the right, or from the left. Alternatively, these components may be mounted from the same direction or from respective different directions. The location determination for the platform may be performed in the same way as for the vehicle 100 in the first embodiments.

(C6) The vehicle 100 may be manufactured by combining a plurality of modules. The module means a unit composed of one or more components grouped according to a configuration or function of the vehicle 100. For example, a platform of the vehicle 100 may be manufactured by combining a front module, a center module and a rear module. The front module constitutes a front part of the platform, the center module constitutes a center part of the platform, and the rear module constitutes a rear part of the platform. The number of the modules constituting the platform is not limited to three but may be equal to or less than two, or equal to or greater than four. In addition to or instead of the platform, any parts of the vehicle 100 different from the platform may be modularized. Various modules may include an arbitrary exterior component such as a bumper or a grill, or an arbitrary interior component such as a seat or a console. Not only the vehicle 100 but also any types of moving object may be manufactured by combining a plurality of modules. Such a module may be manufactured by joining a plurality of components by welding or using a fixture, for example, or may be manufactured by forming at least part of the module integrally as a single component by casting. A process of forming at least part of a module as a single component is also called Giga-casting or Mega-casting. Giga-casting can form each part conventionally formed by joining multiple parts in a moving object as a single component. The front module, the center module, or the rear module described above may be manufactured using Giga-casting, for example.

(C7) A configuration for realizing running of a vehicle by unmanned driving is also called a "Remote Control auto Driving system". Conveying a vehicle using Remote Control Auto Driving system is also called "self-running conveyance". Producing the vehicle using self-running conveyance is also called "self-running production". In self-running production, for example, at least part of the conveyance of vehicles is realized by self-running conveyance in a factory where the vehicle is manufactured.

(C8) The control and the method described in the present disclosure may be realized by a dedicated computer provided by configuring a processor and a memory programmed in such a manner as to implement one or a plurality of functions embodied by a computer program. Alternatively, the controller and the method described in the present disclosure may be realized by a dedicated computer provided by configuring a processor using one or more dedicated hardware logic circuits. Still alternatively, the controller and the method described in the present disclosure may be realized by one or more dedicated computers configured using a combination of a processor and a memory programmed in such a manner as to implement one or a plurality of functions, and a processor configured using one or more hardware logic circuits. The computer program may be stored as an instruction to be executed by a computer into a computer-readable tangible non-transitory recording medium.

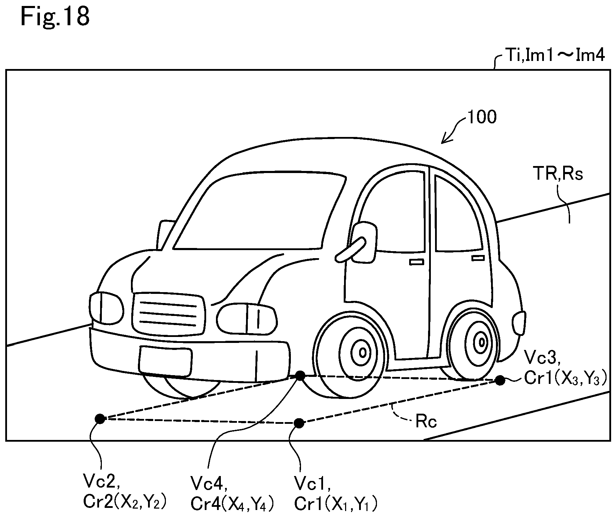

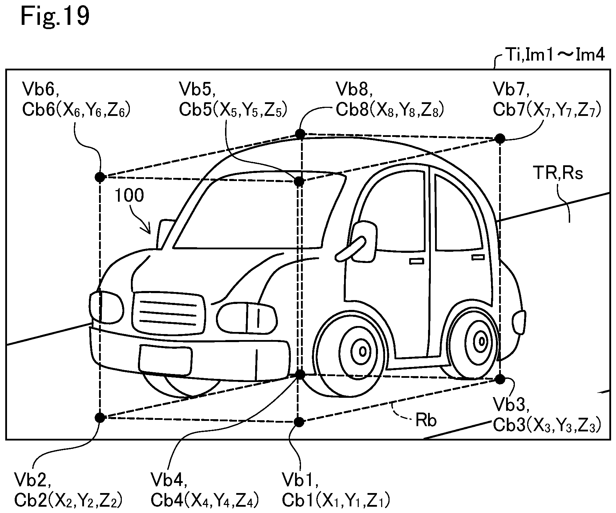

(C9) Fig. 18 is a first explanatory view schematically showing the learned model DM according to another embodiment. Fig. 19 is a second explanatory view schematically showing the learned model DM according to another embodiment. In each of the above-described embodiments, the learned model DM is configured to output a mask image in response to input of a captured image. Meanwhile, the learned model DM may be configured to output a coordinate point relating to a contour of the vehicle 100 in response to input of a captured image. For example, the learned model DM may be configured to output four coordinate points, as shown in Fig. 18. As shown in Fig. 19, the learned model DM may be configured to output eight coordinate points. In such cases, label information includes location coordinates of a coordinate point. The remote controller 210 or the running controller 115 is capable of acquiring vehicle location information using the coordinate point output from the learned model DM, for example.

(C10) In each of the above-described embodiments, of a plurality of locations on a running route of the vehicle 100, the processor 201 may determine a particular location where accuracy of detection of the vehicle 100 using the learned model DM is comparatively low, and may increase the number of the learning data sets DS belonging to the learning data set group DG corresponding to the particular location compared to the other locations. As an example, accuracy of detection of the vehicle 100 using the learned model DM tends to become low in a dark place, in a place of many obstacles, or in a place where the location or position of the vehicle 100 is to change easily due to disturbance. Thus, in generating the learned model DM for acquiring vehicle location information using a captured image from the external camera 300 installed in a dark place, in a place of many obstacles, or in a place where the location or position of the vehicle 100 is to change easily due to disturbance, the processor 201 may increase the number of the learning data sets DS belonging to the learning data set group DG compared to a case of generating the learned model DM for acquiring vehicle location information using a captured image from the external camera 300 installed in a bright place, in a place of a few obstacles, or in a place where the location or position of the vehicle 100 is unlikely to change due to disturbance. For example, the processor 201 may increase the number of the learning data sets DS belonging to the learning data set group DG so as to provide more patterns of lightness, more patterns of the location of the vehicle 100, or more patterns of the position of the vehicle 100. In this case, it is possible to increase accuracy of detection of the vehicle 100 in a dark place, in a place of many obstacles, or in a place where the location or position of the vehicle 100 is to change easily due to disturbance.

(C11) In each of the above-described embodiments, of a plurality of locations on a running route of the vehicle 100, the processor 201 may determine a particular location where accuracy of detection of the vehicle 100 using the learned model DM is comparatively low, and may generate the learning data set DS in response to an environment of the particular location. As an example, accuracy of detection of the vehicle 100 using the learned model DM tends to become low in a dark place, in a place of many obstacles, or in a place where the location or position of the vehicle 100 is to change easily due to disturbance. Thus, in generating the learned model DM for acquiring vehicle location information using a captured image from the external camera 300 installed in a dark place, the processor 201 may reduce lightness in the superimposed image GS compared to a case of generating the learned model DM for acquiring vehicle location information using a captured image from the external camera 300 installed in a bright place. Regarding a place where the location or position of the vehicle 100 is to change easily, influence by disturbance may be incorporated into the location or position of the vehicle 100. In this case, it is possible to increase accuracy of detection of the vehicle 100 in a dark place, in a place of many obstacles, or in a place where the location or position of the vehicle 100 is to change easily due to disturbance.

(C12) In the above-described first embodiment, the remote controller 210 may be provided on a computer different from the server device 200. In this case, the computer including the remote controller 210 is provided with a communication device for communicating with the vehicle 100 via radio communication. The computer including the remote controller 210 acquires the learned model DM generated on the server device 200, and acquires the location and position of the vehicle 100 using the learned model DM.

(C13) In each of the above-described embodiments, the running environment information acquisition unit 230 acquires the factory model MF as running environment information, the vehicle information acquisition unit 240 acquires the vehicle model MV as vehicle information, and the superimposed image generation unit 250 generates a superimposed image by superimposing the vehicle model MV and the factory model MF on each other. Meanwhile, the running environment information acquisition unit 230 may acquire an image representing an appearance of the factory FC including a running route as the running environment information. The image of the factory FC may be a captured image generated by capturing an image of the appearance of the factory FC including the running route in reality space, or may be an image generated by rendering using the factory model MF. The vehicle information acquisition unit 240 may acquire an image representing an appearance of the vehicle 100 as the vehicle information. The image of the vehicle 100 may be a captured image generated by capturing an image of the appearance of the vehicle 100 in reality space or may be an image generated by rendering using the vehicle model MV. The superimposed image generation unit 250 may generate the superimposed image by superimposing the image of the vehicle 100 and the image of the factory FC on each other, in other words, by combining the image of the vehicle 100 and the image of the factory FC with each other. The working unit 260 may conduct certain work on the image of the vehicle 100 or on the image of the factory FC before the superimposed image is generated by superimposing the image of the vehicle 100 and the image of the factory FC on each other. The certain work may be conducted on the superimposed image after the superimposed image is generated by superimposing the image of the vehicle 100 and the image of the factory FC on each other.

The disclosure is not limited to any of the embodiment and its modifications described above but may be implemented by a diversity of configurations without departing from the scope of the disclosure. For example, the technical features of any of the above embodiments and their modifications may be replaced or combined appropriately, in order to solve part or all of the problems described above or in order to achieve part or all of the advantageous effects described above. Any of the technical features may be omitted appropriately unless the technical feature is described as essential in the description hereof.

**Claims**

1. A method comprising:

    acquiring a moving route (RR) of a moving object (100);
    generating a superimposed image (GS) by superimposing an image or three-dimensional data (MV) representing the moving object and an image or three-dimensional data (MF) representing an environment (FC) related to moving including the moving route on each other;

acquiring a label information (LB) about the location and position of the moving object; and

generating a learning data set (DS) including the superimposed image and the label information.

2. The method according to claim 1, further comprising:
conducting a predetermined work on the image or the three-dimensional data about the environment related to moving before the generating the superimposed image.

3. The method according to claim 1, further comprising:
conducting a predetermined work on the image or the three-dimensional data about the moving object before the generating the superimposed image.

4. The method according to claim 1, further comprising:
conducting a predetermined work on the superimposed image.

5. The method according to claim 4, wherein
the predetermined work includes at least one of addition or change of light to be applied to the moving object and addition or change of shading of the moving object.

6. The method according to claim 4, wherein
the predetermined work includes change of at least one of lightness, saturation, and contrast.

7. The method according to claim 1, wherein

the generating the superimposed image is performed a plurality of times, and
a difference is made in the location of the moving object in a direction parallel to the moving route between at least two of a plurality of the superimposed images generated by performing the generating the superimposed image the plurality of times.

8. The method according to claim 1, wherein

the generating the superimposed image is performed a plurality of times, and
a difference is made in the location of the moving object in a direction vertical to the moving route between at least two of a plurality of the superimposed images generated by performing the generating the superimposed image the plurality of times.

9. The method according to claim 1, wherein

the generating the superimposed image is performed a plurality of times, and
a difference is made in the position of the moving object relative to the moving route between at least two of a plurality of the superimposed images generated by performing the generating the superimposed image the plurality of times.

10. The method according to claim 1, wherein

the generating the superimposed image is performed a plurality of times, and
a difference is made in a color of the moving object between at least two of a plurality of the superimposed images generated by performing the generating the superimposed image the plurality of times.

11. The method according to claim 1, wherein
in the acquiring a label information, the label information is acquired from information associated with the image or the three-dimensional data about the moving object.

12. The method according to claim 1, further comprising:
performing machine learning using a learning data set group (DG) including the learning data set.

13. The method according to claim 12, further comprising:

acquiring information about the location and position of the moving object during a move in the environment related to moving using a learned model (DM) generated by the performing machine learning and a captured image of the moving object during the move in the environment related to moving.

14. The method according to claim 1, wherein

the generating the superimposed image is performed a plurality of times,
the method further comprises performing machine learning using a learning data set group (DG) including a plurality of the learning data sets,
determining a particular location among a plurality of locations on the moving route, the particular location is a location where accuracy of output of a learned model (DM) generated by the performing machine learning is comparatively low, and
the number of the learning data sets corresponding to the particular location is increased compared to another location.

15. A device (200) comprising:

a moving route acquisition unit (220) configured to acquire a moving route (RR) of a moving object (100);
a superimposed image generation unit (250) configured to generate a superimposed image (GS) by superimposing an image or three-dimensional data (MV) representing the moving object and an image or three-dimensional data (MF) representing an environment (FC) related to moving including the moving route on each other;
a label information acquisition unit (270) configured to acquire label information (LB) about the location and position of the moving object; and
a data set generation unit (280) configured to generate a learning data set (DS) including the superimposed image and the label information.

Fig.1

Fig.2

100

110

| PROCESSOR | MEMORY |
|---|---|
| RUNNING CONTROLLER ~115 | PROGRAM ~ PG1 |

111

113 — INPUT/OUTPUT INTERFACE

112

114

120

130

ACTUATOR GROUP

COMMUNICATION DEVICE

Fig.3

200

| PROCESSOR | | MEMORY | |
|---|---|---|---|
| REMOTE CONTROLLER | ~210 | PROGRAM | ~PG2 |
| RUNNING ROUTE ACQUISITION UNIT | ~220 | REFERENCE ROUTE | ~ RR |
| RUNNING ENVIRONMENT INFORMATION ACQUISITION UNIT | ~230 | LEARNED MODEL | ~ DM |
| VEHICLE INFORMATION ACQUISITION UNIT | ~240 | VEHICLE MODEL | ~ MV |
| SUPERIMPOSED IMAGE GENERATION UNIT | ~250 | FACTORY MODEL | ~ MF |
| WORKING UNIT | ~260 | | |
| LABEL INFORMATION ACQUISITION UNIT | ~270 | | |
| DATA SET GENERATION UNIT | ~280 | | |
| LEARNING UNIT | ~290 | | |

201    202

203    INPUT/OUTPUT INTERFACE    204

| COMMUNICATION DEVICE | INPUT DEVICE | DISPLAY DEVICE |
|---|---|---|
| ~205 | ~206 | ~207 |

Fig.4

SERVER

VEHICLE

START

↓ S110

ACQUIRE VEHICLE LOCATION INFORMATION USING
DETECTION RESULT FROM EXTERNAL SENSOR

↓ S120

DETERMINE NEXT TARGET LOCATION

↓ S130

GENERATE RUNNING CONTROL SIGNAL

↓ S140

TRANSMIT RUNNING CONTROL
SIGNAL TO VEHICLE

↓

END

START

↓ S150

RECEIVE RUNNING CONTROL
SIGNAL FROM SERVER

↓ S160

CONTROL ACTUATOR USING
RUNNING CONTROL SIGNAL

↓

END

Fig.5

```
                    ┌─────────────┐
                    │    START    │
                    └──────┬──────┘
                           ▼
              ┌───────────────────────┐
              │  IMAGE ACQUIRING STEP │ ～ S410
              └───────────┬───────────┘
                          ▼
              ┌───────────────────────────┐
              │ DISTORTION CORRECTING STEP│ ～ S420
              └───────────┬───────────────┘
                          ▼
              ┌───────────────────────────┐
              │ ROTATION PROCESSING STEP  │ ～ S430
              └───────────┬───────────────┘
                          ▼
              ┌───────────────────────┐
              │     TRIMMING STEP     │ ～ S440
              └───────────┬───────────┘
                          ▼
              ┌───────────────────────┐
              │    DETECTING STEP     │ ～ S450
              └───────────┬───────────┘
                          ▼
              ┌────────────────────────────────┐
              │ PERSPECTIVE TRANSFORMING STEP  │ ～ S460
              └───────────┬────────────────────┘
                          ▼
              ┌──────────────────────────────────┐
              │ COORDINATE POINT CALCULATING STEP│ ～ S470
              └───────────┬──────────────────────┘
                          ▼
              ┌────────────────────────────┐
              │ LOCATION CONVERTING STEP   │ ～ S480
              └───────────┬────────────────┘
                          ▼
                    ┌─────────────┐
                    │     END     │
                    └─────────────┘
```

Fig.6

Fig.7

Fig.8

ROTATE

ROTATE
REVERSELY

Fig.9

Fig.10

Fig.11

```
        ┌─────────────────┐
        │      START      │
        └─────────────────┘
                 │
                 ▼
        ┌─────────────────┐
        │ ACQUIRE RUNNING │ ──S510
        │ ROUTE OF VEHICLE│
        └─────────────────┘
                 │
                 ▼
        ┌─────────────────┐
        │ACQUIRE FACTORY  │ ──S520
        │MODEL AND VEHICLE│
        │     MODEL       │
        └─────────────────┘
                 │
                 ▼
        ┌─────────────────┐
        │   PRE-PROCESS   │ ──S530
        └─────────────────┘
                 │
                 ▼
        ┌─────────────────┐
        │    GENERATE     │ ──S540
        │SUPERIMPOSED IMAGE│
        └─────────────────┘
                 │
                 ▼
        ┌─────────────────┐
        │  POST-PROCESS   │ ──S550
        └─────────────────┘
                 │
                 ▼
        ┌─────────────────┐
        │  ACQUIRE LABEL  │ ──S560
        │   INFORMATION   │
        └─────────────────┘
                 │
                 ▼
        ┌─────────────────┐
        │    GENERATE     │ ──S570
        │ LEARNING DATA SET│
        └─────────────────┘
                 │
                 ▼          ──S580
         ╱───────────────╲   YES
        ╱  TO GENERATE    ╲────────
        ╲ DIFFERENT PATTERN?╱
         ╲───────────────╱
                 │ NO
                 ▼
        ┌─────────────────┐
        │ MACHINE LEARNING│ ──S590
        └─────────────────┘
                 │
                 ▼
        ┌─────────────────┐
        │      END        │
        └─────────────────┘
```

Fig.12

Fig.13

GS  DS  LB  DG

Fig.14

Fig.15

100

110

PROCESSOR

RUNNING
CONTROLLER ~115

MEMORY

PROGRAM ~PG1

REFERENCE
ROUTE ~ RR

LEARNED MODEL ~ DM

111

113

112

114

INPUT/OUTPUT INTERFACE

120

130

ACTUATOR
GROUP

COMMUNICATION
DEVICE

Fig.16

200

PROCESSOR

| RUNNING ROUTE ACQUISITION UNIT | ~220 |

| RUNNING ENVIRONMENT INFORMATION ACQUISITION UNIT | ~230 |

| VEHICLE INFORMATION ACQUISITION UNIT | ~240 |

| SUPERIMPOSED IMAGE GENERATION UNIT | ~250 |

| WORKING UNIT | ~260 |

| LABEL INFORMATION ACQUISITION UNIT | ~270 |

| DATA SET GENERATION UNIT | ~280 |

| LEARNING UNIT | ~290 |

MEMORY

| PROGRAM | ~PG2 |

| REFERENCE ROUTE | ~RR |

| LEARNED MODEL | ~DM |

| VEHICLE MODEL | ~MV |

| FACTORY MODEL | ~MF |

201

202

203

204

INPUT/OUTPUT INTERFACE

205

206

207

COMMUNICATION DEVICE

INPUT DEVICE

DISPLAY DEVICE

Fig.17

VEHICLE

START

ACQUIRE VEHICLE LOCATION INFORMATION USING
DETECTION RESULT FROM EXTERNAL SENSOR — S310

DETERMINE NEXT
TARGET LOCATION — S320

GENERATE RUNNING
CONTROL SIGNAL — S330

CONTROL ACTUATOR USING
RUNNING CONTROL SIGNAL — S340

END

Fig.18

Fig.19

Vb6,
Cb6($X_6,Y_6,Z_6$)

Vb5,
Cb5($X_5,Y_5,Z_5$)

Vb8,
Cb8($X_8,Y_8,Z_8$)

Vb7,
Cb7($X_7,Y_7,Z_7$)

Ti,Im1～Im4

TR,Rs

100

Vb3,
Cb3($X_3,Y_3,Z_3$)

Rb

Vb2,
Cb2($X_2,Y_2,Z_2$)

Vb4,
Cb4($X_4,Y_4,Z_4$)

Vb1,
Cb1($X_1,Y_1,Z_1$)

Europäisches
Patentamt

European
Patent Office

Office européen
des brevets

# EUROPEAN SEARCH REPORT

**Application Number**

EP 24 20 0296

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 112 347 993 A (UNIV JILIN) 9 February 2021 (2021-02-09) * paragraph [0006] - paragraph [0176] * ----- | 1-15 | INV. G06V10/774 G06V20/54 |
| X | US 2021/191395 A1 (GAO JIYANG [US] ET AL) 24 June 2021 (2021-06-24) * paragraphs [0049] - [0119] * ----- | 1-15 | |
| A | US 2021/229680 A1 (CHAKRAVARTY PUNARJAY [US] ET AL) 29 July 2021 (2021-07-29) * paragraphs [0059] - [0063]; figure 9 * ----- | 1-15 | |

| | |
|---|---|
| | **TECHNICAL FIELDS SEARCHED (IPC)** |
| | G06V |

The present search report has been drawn up for all claims

| Place of search | Date of completion of the search | Examiner |
|---|---|---|
| The Hague | 12 February 2025 | Natanni, Francesco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**                  EP 24 20 0296

This annex lists the patent family members relating to the patent documents cited in  the above-mentioned European search report.
The members are as contained in the European Patent Office EDP file on
The European Patent Office is in no way liable for these particulars which are merely given for the purpose of information.

12-02-2025

| Patent document cited in search report | Publication date | Patent family member(s) | | Publication date |
|---|---|---|---|---|
| CN 112347993 A | 09-02-2021 | NONE | | |
| US 2021191395 A1 | 24-06-2021 | CA | 3165486 A1 | 24-06-2021 |
| | | CN | 115053237 A | 13-09-2022 |
| | | EP | 4066171 A1 | 05-10-2022 |
| | | US | 2021191395 A1 | 24-06-2021 |
| | | WO | 2021127507 A1 | 24-06-2021 |
| US 2021229680 A1 | 29-07-2021 | CN | 113177429 A | 27-07-2021 |
| | | DE | 102021101270 A1 | 29-07-2021 |
| | | US | 2021229680 A1 | 29-07-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023178236 A
- JP 2017538619 W